# EUROPEAN PATENT APPLICATION

(11) **EP 3 656 535 A1**
(43) Date of publication of application: **27.05.2020**
(21) Application number: 18207724.8
(22) Date of filing: 22.11.2018
(51) Int. Cl.: B29C 64/106, B29C 64/188, B29C 64/336, B29C 64/118, B33Y 10/00, B33Y 40/00

(54) **METHOD FOR CREATING A 3D-PART, INVOLVING 3D-PRINTING, 3D-PART WITH 3D-PRINTED LAYERS AND 3D-PRINTING DEVICE**

(71) Applicant: Siemens Aktiengesellschaft, 80333 München (DE)
(72) Inventor: Ceriani, Nicola Maria, 91052 Erlangen (DE); Schenk, Bernhard, 90537 Feucht (DE)

(57) **Abstract**

A method for creating a 3D-part (10) and a system for working according to the said method is proposed and the said method comprises the steps of 3D-printing consecutive layers (14) on top of each other, wherein each layer (14) comprises a through hole (40), wherein the holes (40) are aligned with each other from layer (14) to layer (14) and wherein the holes (40) constitute a continuous cavity (42) in the 3D-part (10); filling the cavity (42) with molten filling material (46); and awaiting solidification of the filling material (46) inside the cavity (42).

## Description

### FIELD OF THE INVENTION

The present invention relates in general to a method and a system for 3D-printing and also to a 3D-part created using 3D-printing methods. More specifically, the invention relates to a method for creating a three-dimensional part (3D-part), involving 3D-printing, as well as to a 3D-part created according to the method and furthermore to a system arranged for performing the method and for creating a 3D-part, involving 3D-printing.

The invention is aimed at improving the mechanical properties of 3D-printed parts with the so-called material extrusion (ME) method. More specifically, the invention is aimed at solving the problem of reducing the anisotropy of parts 3D-printed with the material extrusion (ME) method and at improving the mechanical properties of such parts perpendicular to the planes of their layers.

The ME fabrication method is typically characterized by the use of a polymer in the form of filament or pellets as raw material which is melted and extruded through an orifice. The material is then deposited layer after layer on a so-called printing bed forming the desired part. The layer structure thus created is strongly anisotropic and the surfaces of adhesion between the layers constitute a point of weakness of the resulting 3D-part. This is due to the fact that the strength of the bond between consecutive layers is lower than the resistance of the extruded material itself.

### BACKGROUND OF THE INVENTION

Several attempts using different techniques have been made to solve this problem. One approach is to use extrusion orifices of special shapes to increase the area of adhesion and/or to take advantage of interlocking mechanisms between consecutive layers. Known systems following this principle comprise/ extruder orifices with corrugated edges or with non-circular shapes. Furthermore, solutions have been proposed where the above mentioned special orifices can be rotated during the 3D-printing process to further optimize the geometry of the deposited material and to increase the adhesion strength.

A second approach pursues the improvement of the adhesion by heating the layer on top of which new material has to be deposited. To this end a first technical solution involves the heating of the topmost layer using a laser beam just before new material is deposited on top. Another solution involves the heating of the material by direct contact with a hot tool such as a roller and then to press the newly deposited material with a further roller to improve the bond.

A third approach known in the art works by leaving holes in printed layers that are then filled by the next layer, creating a less anisotropic structure and increasing the adhesion strength.

The common limitation of the mentioned approaches is that they work with layer pairs only, more specifically they strengthen the connection just between adjacent layers but they do not affect the whole part.

Therefore there is a need for a method for 3D-printing which affects the part to be printed in its entirety, and for a corresponding system capable of carrying out any such method.

### SUMMARY OF THE INVENTION

The invention is a method for 3D-printing as defined in the first independent claim, a 3D-part as defined in the second independent claim and a 3D-printing system as defined in the third independent claim.

One aspect of the present invention involves a method for creating a three-dimensional part (3D-part), wherein the creation of the said part involves 3D-printing.
The said method comprises
the step of 3D-printing consecutive layers of 3D-printable material on top of each other, more particularly the step of 3D-printing consecutive layers of 3D-printable material on top of each other with the material extrusion (ME) method,
wherein the outer surface of each layer is a part of the outer surface of the resulting 3D-part,
wherein each layer comprises a through hole,
wherein the holes are aligned with each other from layer to layer and
wherein the holes constitute a continuous cavity in the 3D-part.
The said method also comprises
the step of filling the cavity with molten filling material; and
the said method furthermore comprises
the step of awaiting solidification of the filling material inside the cavity.

Another aspect of the present invention is a 3D-part resulting from the aforesaid method or preferred embodiments of the said method. The 3D-part is composed of a multitude of layers, 3D-printed on top of each other, wherein each layer comprises a through hole, wherein the holes are aligned with each other from layer to layer, wherein the holes constitute a continuous cavity in the 3D-part and wherein the cavity is filled with an initially fluid and solidifying filling material.

One advantage of the approach proposed here and hereinafter is that the filling material inside the cavity bonds the 3D-printed layers together once the filling material has solidified to a rigid structure (reinforcement structure) and improves the mechanical properties of the resulting 3D-part.

It is to be noted that a 3D-part according to the approach presented here or manufactured according to the approach may comprise one or more continuous cavities filled with filling material or to be filled with filling material. Each cavity results from holes in consecutive 3D-printed layers, i.e. at least one hole in each of the consecutive layers. The holes are aligned with each other at least to that end that a continuous cavity results. Alignment of the holes in this sense means that at least a portion of each hole provides a passage for a liquid or a liquefied material, more particularly the filling material, to the hole in the subjacent layer. Alignment in this sense does not require that the holes e.g. are concentrically vertically aligned.

In a preferred embodiment of the method for creating a 3D-part the molten filling material is extruded into the cavity by means of an extruder aligned with the hole in the topmost layer of the 3D-part. The extruder is capable of melting the filling material and of discharging (by means of an extruder nozzle) the molten material directly into the cavity. In a preferred embodiment the said extruder is the same extruder employed for 3D-printing the multitude of layers, that is the 3D-printing of the layers and the filling of the cavity is performed with the same device, i.e. the extruder of the 3D-printing device or of the 3D-printing system.

In another preferred embodiment of the method for creating a 3D-part the step of 3D-printing consecutive layers on top of each other comprises 3D-printing consecutive layers on top of each other with varying but aligned holes. In a preferred embodiment of the 3D-part itself the said 3D-part comprises consecutive layers on top of each other with varying but aligned holes. Varying holes are for example holes with a varying geometry and/or a varying section or minimal section. With respect to varying geometries the hole in one layer can be e.g. a circular hole and the hole in the next layer (on top of the layer with the circular hole) can be a rectangular hole, or vice-versa. With respect to varying sections the hole in one layer can be e.g. a circular hole with a first diameter and the hole in the next layer (on top of the layer with the said circular hole) can be another circular hole with a second diameter, wherein the said first and second diameters are different. With respect to varying minimal sections the hole in one layer can be e.g. a hole with a polygonal footprint with a first minimal section and the hole in the next layer (on top of the aforesaid layer) can be another hole with a polygonal footprint with a second minimal section, wherein the said first and second minimal sections are different. The examples mentioned here can be arbitrarily combined, resulting in e.g. a 3D-part with circular holes, rectangular holes and/or holes with a polygonal footprint (in arbitrary succession) making up the continuous cavity. The said varying geometries and/or sections or minimal sections of the holes making up the cavity results in an irregular continuous cavity inside the 3D-part and the said irregularity results in e.g. undercuts, wherein the irregularity and/or the undercuts strengthens the rigidity of the 3D-part once the initially molten filling material has solidified inside the cavity, constituting a reinforcement structure inside the 3D-part.

In yet another preferred embodiment of the method for creating a 3D-part or in a preferred embodiment of the 3D-part itself the holes making up the cavity are vertically aligned. Vertical alignment means that it is possible to look from the hole in the topmost layer down through the hole in the lowermost layer. Vertically aligned holes ease the filling of the cavity with the initially molten filling material.

In still another preferred embodiment of the method for creating a 3D-part or in a preferred embodiment of the 3D-part itself the holes are circular holes or rectangular holes. Both circular holes, i.e. cylindrical holes with a circular footprint, or rectangular holes, i.e. cubic or cuboidic holes with a rectangular footprint, comprise a straightforward geometry which is easy to program for 3D-printing. In a preferred embodiment of the method for creating a 3D-part with circular holes or rectangular holes in the multitude of 3D-printed layers or in a preferred embodiment of the 3D-part itself the vertical alignment of the holes is a vertical alignment where all the holes in the stack of the multitude of layers are concentric.

In a preferred embodiment of the said 3D-part the filling material is an initially fluid molten filling material solidifying in the cavity, more particularly an initially fluid molten filling material extruded into the cavity.

Another aspect of the present invention involves a system or device - hereinafter commonly termed as system - for creating a three-dimensional part (3D-part). The said system comprises an extruder and the extruder is movable as is known in the art. The extruder functions as a means for 3D-printing consecutive layers, each comprising a through hole, on top of each other, and the same extruder functions as a means for filling the cavity made up by the holes in the said layers with an initially molten filling material. The said system is characterized in being controlled or programmed for initially 3D-printing a multitude of consecutive layers on top of each other, each comprising a through hole, wherein the holes are aligned with each other and make up a continuous cavity or at least one continuous cavity in the 3D-part, and in being controlled or programmed for subsequently, i.e. after the 3D-printing of the multitude of layers, extruding a molten filling material through the orifice of the extruder into the or each cavity in the 3D-part. By defining the said system as being controlled or programmed for 3D-printing multiple layers and for extruding a molten filling material into the cavity in the 3D-part it is intended to refer to a controller of the said system comprising electronic and/or computer program means arranged for achieving each of the aforesaid controlled or programmed functions. Preferably, the said system is or is essentially a conventional 3D-printer comprising the said electronic and/or computer program means.

In preferred embodiments of the said system, the system, more particularly the controller of the system, is arranged for performing the method as defined in each one of the appended method claims.

With a view to the said system for creating a 3D-part, another advantage of the approach proposed here and hereinafter is that the approach involves standard parts already comprised in a standard 3D-printing system and does not require modifications, i.e. the same extruder is employed both for the 3D-printing of the different layers and also for filling the cavity in the 3D-part.

Further aspects, features and advantages of the present invention will become apparent from the drawings and detailed description of the following preferred embodiments.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
FIG 1 shows a 3D-printer and a 3D-print part,
FIG 2 shows a 3D-print part and exhibits the layers constituting the 3D-print part in an exploded view,
FIG 3 shows the 3D-print part with the geometry of the 3D-print part of FIG 2, the layers making up the 3D-print part, each comprising a central cylindrical hole, and a vertical section through the resulting 3D-print part and through a cavity inside the 3D-print part, resulting from the holes in consecutive layers,
FIG 4 shows the 3D-print part of FIG 3 and the process of filling the cavity inside the 3D-print part with an initially liquid filling material solidifying inside the cavity and resulting in a reinforcement structure in the 3D-print part and for the 3D-print part,
FIG 5 shows various forms of holes in consecutive layers and the cavity inside the 3D-print part resulting therefrom and
FIG 6 shows in simplified form a computer program for carrying out the approach proposed here.

### DETAILED DESCRIPTION OF THE PREFERRED EMBODIMENTS

### Overview

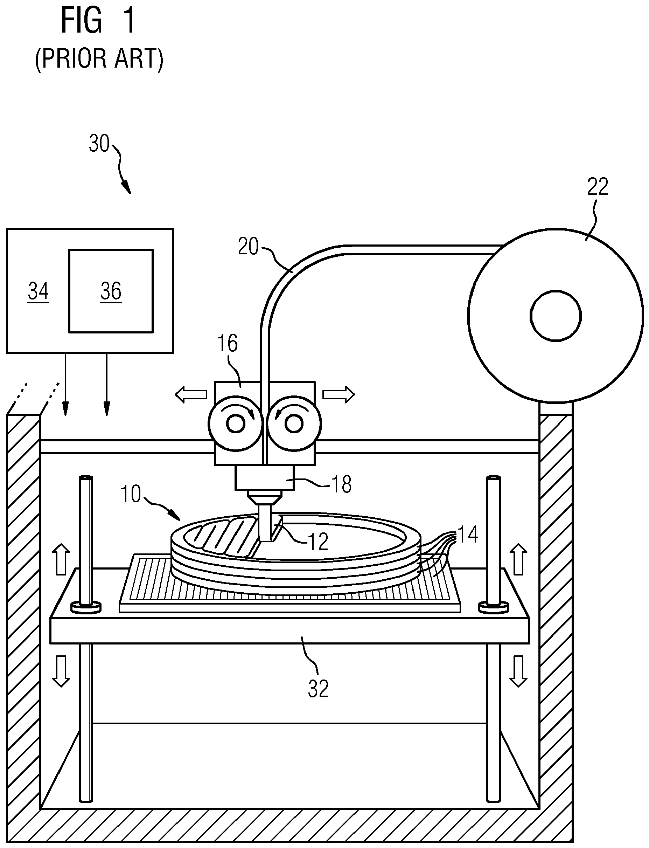

FIG 1 shows - in simplified form - a 3D-printing process according to the ME (material extrusion) fabrication method. A 3D-print part 10 is created by depositing beads 12 of a molten material in multiple layers 14, each layer 14 on top of the preceding (lower/subjacent) layer 14.

The said beads 12 are conventionally deposited by means of a 3D-printing head 16, comprising an extruder 18 and an extruder nozzle. The extruder 18 normally hosts a liquefier (not shown) that melts a filament 20 pulled off from a spool 22 or the like. The extruder 18 allows the molten filament material, normally some type of plastic, e.g. ABS (Acrylonitrile butadiene styrene), PLA (polylactic acid), PET (Polyethylene terephthalate), Nylon etc., to exit from the said extruder nozzle to form a bead 12 of molten filament material that will adhere to adjacent material and the material it is laid on, i.e. the subjacent layer 14. Conventionally different types of nozzles and different types of heating methods are used depending upon the material to be printed.

The system shown in FIG 1 is a 3D-printer 30 and the 3D-printer 30 comprises the printing head 16 with the extruder 18, a tray 32 for creating the relevant 3D-part 10 on (printing bed) and conventional drive means (not shown) for conventional movement of the printing head 16 and/or the tray 32. The said drive means are for example conventional traverse drive systems comprising e.g. a threaded spindle or a toothed rack. Movement of the printing head 16 and/or the tray 32 is conventionally controlled by means of a controller (control system) 34 of the 3D-printer 30. In FIG 1 the two downfacing arrows originating from the controller 34 are meant to symbolize control signals generated by the controller 34 for actuating the extruder 18 and any drive means of the 3D-printer 30.

It is to be noted that the depiction of the 3D-part 10, its layers 14 and the bead 12 of deposited material is not to scale with the depiction of the 3D-printer 30 and its components. The 3D-part 10 is displayed with a view to showing how the layers 14 are established and not with a view to accuracy in scale.

The controller 34 conventionally comprises a processing means, e.g. a standard microprocessor, and a memory means, e.g. a conventional random-access memory (RAM). Operation of the 3D-printer 30 is conventionally controlled by a control program 36 stored in the said memory means and executed by the said processing means.

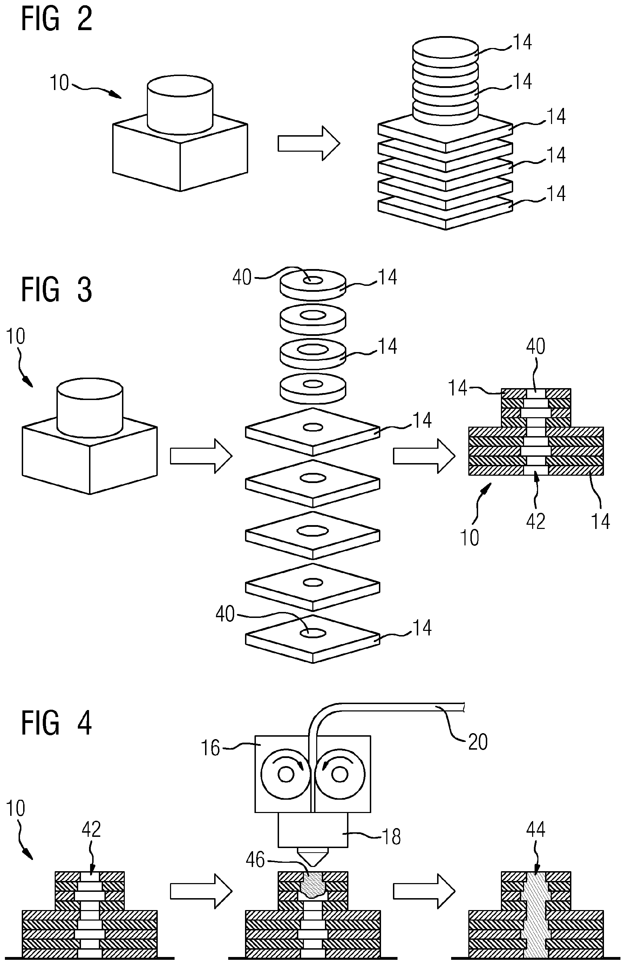

FIG 2 shows on the left-hand side a 3D-print part 10 and on the right-hand side in an exploded view a multitude of layers 14 which, when printed layer 14 after layer, for example with a 3D-printer 30 as shown in FIG 1, more particularly with a 3D-printer 30 printing according to the ME (material extrusion) fabrication method, make up the 3D-print part 10.

It is to be understood that the 3D-print part 10 - hereinafter often termed solely as part 10 for the sake of brevity - shown in FIG 2 is a very simple part 10, i.e. a part 10 with a simple geometry. However, a simple geometry is used in this description of a preferred embodiment solely with a view to ease understanding of the proposed concept. The invention is not limited to any such simple geometry and the specification submitted here must not be construed as limiting the proposed concept to 3D-printed parts with a simple geometry.

FIG 3 shows a major aspect of the approach proposed here in simplified form. FIG 3 shows (from left to right) an isometric view of a part 10 with the same outer geometry as the part 10 in FIG 1, multiple layers 14 making up the said part 10 and a vertical section through the said part 10 and its layers 14. The part 10 is the result of 3D-printing multiple layers 14 on top of each other (as shown in FIG 1 and FIG 2). The said multiple layers 14 are shown in the center of FIG 3. Each layer 14 comprises an opening 40. Each opening 40 is a through opening, i.e. the opening 40 extends throughout the thickness of the relevant layer 14.

As can be seen in FIG 3 the openings 40 (voids or holes) are aligned with each other in consecutive layers 14 so as to create a continuous cavity 42 (at least one continuous cavity 42) in the part 10. In the embodiment shown in FIG 3 the openings 40 are shown as cylindrical openings (cylindrical voids) 40 and are concentrically aligned with each other. However, both cylindrical openings 40 and concentrically aligned openings 40 are an advantageous embodiment only. The openings 40 can have any geometry available with 3D-printing and the openings 40 can be aligned in any suitable form resulting in a continuous cavity 42.

The said openings 40 are termed hereinafter briefly as holes 40. However, the term hole 40 must not be construed as referring to a circular opening 40. The holes 40 can have any geometry and a corresponding footprint, i.e. a circular footprint, a polygonal footprint or an entirely irregular footprint. The or each cavity 42 in the part 10 is dimensioned with a view to allowing the cavity 42 being filled with a molten, flowable filling material. A complete filling of the cavity 42 must be possible and to this end the minimum sections of the holes 40 or the minimum sections of a passage from one hole 40 to the hole 40 in the subjacent layer 14 and any section changes from layer 14 to layer 14 must be properly sized.

FIG 4 shows the formation of the part 10, wherein each layer 14 of the part 10 (or at least consecutive layers of the part 10) comprises a through hole 40 and wherein the holes 40 are aligned in that each hole 40 is a least open to the hole 40 in the subjacent layer 14. In a simple embodiment, when each hole 40 is a hole 40 with a circular footprint, vertically aligned holes 40 result from concentric holes 40 throughout the stack of layers 40. However, concentricity is not imperative and the holes 40 can be eccentric while still being open to the hole 40 in the subjacent layer 14. On account of the said alignment of the holes 40 throughout the stack of layers 14 or at least throughout a subset of the layers 14 the holes 40 make up the cavity 42 (a continuous cavity 42) inside the part 10, and when the geometry of the holes 40 varies from one layer 14 to the adjacent layer 14, a cavity 42 with an irregular surface results.

FIG 4 moreover shows a formation of a reinforcement structure 44 inside the cavity 42. The reinforcement structure 44 is created by filling the cavity 42 with molten raw material 46. This is done by placing a material extruder, more particularly the extruder 18 of the 3D-printing head 16 (FIG 1), over the opening of the cavity 42 and by extruding the material 46 until the cavity 42 is filled. Preferably, the material 46 of the reinforcement structure 44 is the same material 46 used for printing the layers 14 and to this end the extruder 18 comprised by the printing head 16 of a 3D-printer (FIG 1) is the material extruder for filling the cavity 42 with the filling material 46. However, the material 46 can also be a material different from the material used for printing the layers 14, e.g. ABS, PLA, PET, Nylon etc..

When filling the cavity 42 with the material 46 of the reinforcement structure 44, e.g. by melting a filament 20 pulled off from a spool 22 (FIG 1), the said material 46 can be extruded at a temperature equal or essentially equal to the temperature used for printing the layers 14. However, in order to simplify the filling operation, the material 46 can optionally be extruded at a higher temperature in order to achieve a decreased viscosity and a sufficient flowability. A decreased viscosity of the material 46 for the reinforcement structure 44 is unproblematic on account of the cavity 42 being entirely inside the part 10 and its layers 14 and thus forming a casting mold for the extruded material 46.

From left to right, FIG 4 shows schematically the filling operation, i.e. the operation of filling the continuous cavity 42 in multiple layers 14 with an extruded material 46, wherein the extruded material 46 fills the cavity 42 in a positive-fitting form, so that a transversal reinforcement structure 44 results in the cavity 42 and inside the part 10. The said reinforcement structure 44 connects the layers 14 of the part 10 or multiple layers 14 of the part 10 with each other.

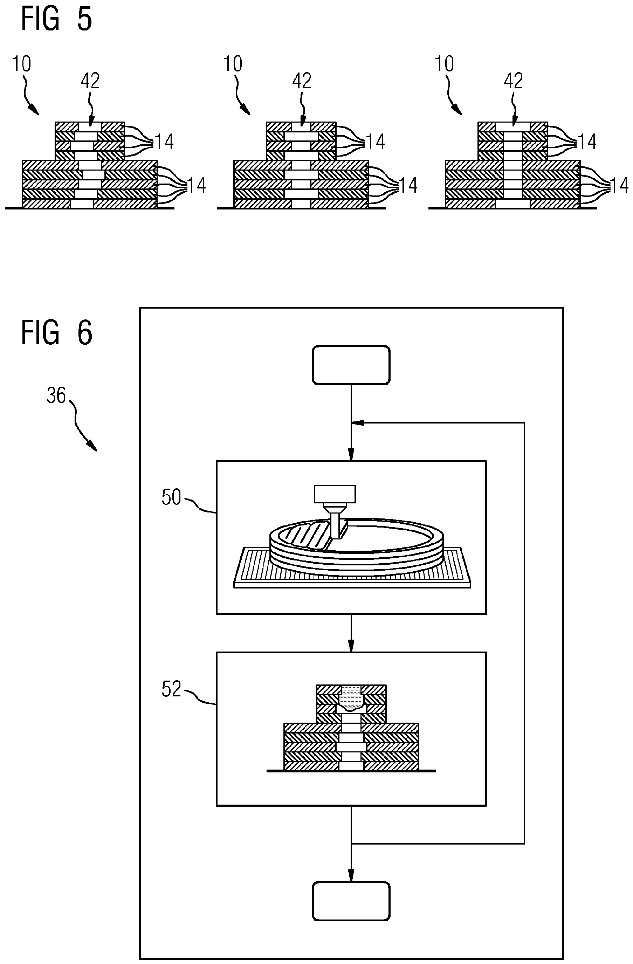

FIG 5 shows various examples of vertically aligned holes 40 in consecutive layers 14, wherein the holes 40 are aligned to each other as described above, i.e. each hole 40 is open to the hole 40 in the subjacent layer 14. The form-fit filling of the resulting cavity 42 with an extruded material 46 results in a reinforcement structure 44 which bonds the layers 14 together and which cannot be dislocated relative to the layers 14.

FIG 6 shows the control program (computer program) 36 executed by the controller 34 (FIG 1), when a 3D-part with a reinforcement structure 44 inside the 3D-part is created as described. The control program 36 basically consists of two major parts 50, 52. A first part 50 comprises computer program instructions which, when the control program 36 is executed by the controller 34, cause the controller 34 to actuate the extruder 18 and any drive means of the 3D-printer 30 to print consecutive layers 14 of a 3D-part, each comprising a through hole 40 as described above, in conventional manner. A second part 52 comprises computer program instructions which, when the control program 36 is executed by the controller 34, cause the controller 34 to actuate the extruder 18 and any drive means of the 3D-printer 30 to place the extruder 18 over the cavity 42 in the 3D-part 10 and to extrude filling material 46 into the cavity 42. The process may be repeated once or several times, depending e.g. on the size and/or the geometry of the 3D-part 10, printing further cavities 42 and filling the same as described.

Those skilled in the art will readily understand that the approach proposed here can be applied to various forms of 3D-print parts 10, various forms and multitudes of layers 14, various forms, numbers and sizes of openings/holes 40 in each layer 14 and one or more cavities 42 resulting from the openings/holes 40.

Consequently, in addition to the embodiments of the aspects of the present invention described above, those of skill in the art will be able to arrive at a variety of other arrangements and steps which, if not explicitly described in this document, nevertheless embody the principles of the invention and fall within the scope of the appended claims. The present invention can be used for strengthening and solidifying 3D-print part 10 and more particularly the present invention is a solution for reducing the anisotropy in 3D-printed parts.

## Claims

1. A method for creating a 3D-part (10), said method comprising the steps of:
3D-printing consecutive layers (14) on top of each other,
wherein each layer (14) comprises a through hole (40),
wherein the holes (40) are aligned with each other from layer (14) to layer (14) and
wherein the holes (40) constitute a continuous cavity (42) in the 3D-part (10);
filling the cavity (42) with molten filling material (46); and
awaiting solidification of the filling material (46) inside the cavity (42).

2. The method of claim 1,
wherein the molten filling material (46) is extruded into the cavity (42) by means of an extruder (18) aligned with the hole (40) in the topmost layer (14) of the 3D-part (10).

3. The method of claim 1 or claim 2,
wherein the step of 3D-printing consecutive layers (14) on top of each other comprises
3D-printing consecutive layers (14) with varying but aligned holes (40) on top of each other.

4. The method of any one of the preceding claims,
wherein the 3D-printing of consecutive layers (14) on top of each other, each layer (14) comprising a through hole (40), and the filling of the cavity (42) with molten filling material (46) is performed with the same system (30) for 3D-printing a 3D-part (10).

5. The method of any one of the preceding claims,
wherein a temperature of the molten filling material (46) is higher than a temperature used when 3D-printing the consecutive layers (14) on top of each other.

6. The method of any one of the preceding claims,
wherein the holes (40) are vertically aligned.

7. The method of any one of the preceding claims,
wherein the holes (40) are circular holes (40).

8. A 3D-part (10) composed of a multitude of layers (14) 3D-printed on top of each other,
wherein each layer (14) comprises a through hole (40),
wherein the holes (40) are aligned with each other from layer (14) to layer (14),
wherein the holes (40) constitute a cavity (42) in the 3D-part (10) and
wherein the cavity (42) is filled with a filling material (46) .

9. The 3D-part (10) of claim 8,
wherein the filling material (46) is an initially fluid molten filling material (46) solidifying in the cavity (42).

10. The 3D-part (10) of claim 8 or claim 9,
wherein the filling material (46) is an initially fluid molten filling material (46) extruded into the cavity (42).

11. The 3D-part (10) of any one of the preceding claims 8 to 10,
wherein the holes (40) comprise a varying geometry and/or footprint.

12. The 3D-part (10) of any one of the preceding claims 8 to 11,
wherein the holes (40) are vertically aligned and/or comprise a circular footprint.

13. A system (30) for 3D-printing a 3D-part (10),
wherein the said system (30) comprises a movable extruder (18),
wherein the said system (30) is arranged for 3D-printing consecutive layers (14) on top of each other by means of extruding molten material through an orifice of the extruder (18),
**characterized**
**in that** the said system (30) is controlled for initially 3D-printing a multitude of consecutive layers (14) on top of each other, each comprising a through hole (40), wherein the holes (40) are aligned with each other and make up at least one continuous cavity (42) in the 3D-part (10), and
**in that** the said system (30) is controlled for subsequently extruding a molten filling material (46) through the orifice of the extruder (18) into the at least one cavity (42) in the 3D-part (10).
